# EUROPÄISCHE PATENTSCHRIFT

(11) **EP 2 587 036 B1**
(45) Veröffentlichungstag und Bekanntmachung des Hinweises auf die Patenterteilung: **09.10.2019**
(21) Anmeldenummer: 12005198.2
(22) Anmeldetag: 14.07.2012
(51) Int. Cl.: F02F 7/00, F01M 13/00, F01M 13/04, F16B 5/02, F02F 11/00, F16M 1/026

(54) **Brennkraftmaschine**
Combustion engine
Moteur à combustion

(30) Priorität: 26.10.2011 DE 102011116934
(43) Veröffentlichungstag der Anmeldung: 01.05.2013
(73) Patentinhaber: MAN Truck & Bus SE, 80995 München (DE)
(72) Erfinder: Sengstock, Harald, 90469 Nürnberg (DE); Dietmair, Andreas, 86169 Augsburg (DE); Fakler, Udo, 90610 Nürnberg (DE); Rudert, Tino, 06217 Merseburg (DE)
(74) Vertreter: Liebl, Thomas

(56) Entgegenhaltungen:
- DE-A1- 3 329 418
- FR-A1- 2 317 500
- JP-U- S6 041 695
- JP-U- S6 047 992
- US-A- 2 724 378
- US-B1- 7 051 695

## Beschreibung

Die vorliegende Erfindung betrifft eine Brennkraftmaschine gemäß dem Oberbegriff des Patentanspruchs 1.

Die in Brennkraftmaschinen in deren Kurbelgehäuse abströmenden Blow-by-Gase werden zumeist über eine Kurbelgehäuseentlüftung abgeführt, die in den Zylinderkopf integriert ist, der regelmäßig von einer Ventilhaube abgedeckt ist. Die Ventilhauben sind konstruktionsbedingt nicht auf hohe Drücke ausgelegt, wie sie zum Beispiel bei einem Kolbenschaden in einem der Zylinder der Brennkraftmaschine und entsprechend hoher Durchblasrate auftreten könnten, wodurch es zur Beschädigung der Ventilhauben kommen kann. Durch die US 3,115,268 ist eine Anordnung bzw. Befestigung einer Ventilhaube für eine Brennkraftmaschine beschrieben, bei der Schraubendruckfedern in sämtliche der Befestigungsschrauben eingeschaltet sind. Damit soll ein möglichst gleichmäßiger Anpressdruck an der umlaufenden Dichtung zwischen der Ventilhaube und dem Zylinderkopf erreicht werden.

Die US7051695 B1 offenbart eine Ventilhaube, die an einem Zylinderkopf mittels mehrerer Schraubverbindungen festgelegt ist.

Aus der DE 26 28 692 A1 ist es ferner bekannt, durch die Einschaltung federnd nachgiebiger Mittel in die Befestigung der Ventilhaube die Geräuschabstrahlung durch Körperschall zu vermindern.

Aus der weiteren US 2 724 378 A geht eine Brennkraftmaschine hervor, bei der an einem Brennkraftmaschinen-Gehäuse eine Abdeckung für das Gehäuse lösbar montiert ist. Diese Abdeckung kann hier von einer geschlossenen Position entgegen der Schwerkraft durch einen Explosionsdruck innerhalb des Brennkraftmaschinen-Gehäuses in begrenztem Maße verschwenkt werden, um den Explosionsdruck abzubauen und einem entstehenden Brand entgegenzuwirken.

Aufgabe der Erfindung ist es, mit konstruktiv und baulich einfachen Mitteln ein gezieltes Abblasen von gegebenenfalls auftretendem Überdruck in der Brennkraftmaschine sicherzustellen.

Die Lösung dieser Aufgabe gelingt mit den Merkmalen des Patentanspruchs 1. Vorteilhafte und besonders zweckmäßige Weiterbildungen und Ausgestaltungen der Erfindung sind Gegenstand der Unteransprüche.

Gemäß Anspruch 1 wird eine Brennkraftmaschine vorgeschlagen, mit wenigstens einem Zylinder und einer Anordnung einer Ventilhaube am Zylinderkopf der Brennkraftmaschine, wobei der Zylinderkopf über eine Ventilsteuerung betätigbare Gaswechselventile aufweist, die mit wenigstens einem Einlass- und Auslasskanal verbunden sind, und wobei wenigstens eine den Zylinderkopf nach oben abschließende und über zumindest eine Strömungsverbindung mit dem Kurbelgehäuse der Brennkraftmaschine mittelbar oder unmittelbar verbundene Ventilhaube, vorzugsweise unter Zwischenschaltung einer umlaufenden Dichtung, mittels mehrerer Schraubverbindungen auf dem Zylinderkopf festgelegt ist. Erfindungsgemäß ist vorgesehen, dass wenigstens ein Teil der vorgesehenen Schraubverbindungen auf einer dem wenigstens einen Auslasskanal im Zylinderkopf abgewandten und damit einer kalten Motorseite zugewandten kalten Seite des Zylinderkopfes derart mit einem federnd und/oder elastisch nachgiebigen Mittel versehen und/oder gekoppelt ist, dass die Ventilhaube, insbesondere mit einem definierten Haubenbereich, bei einem definierten Überdruck im Kurbelgehäuse lediglich im Bereich dieser kalten Seite von dem Zylinderkopf und/oder von der Dichtung abhebt.

Das heißt mit anderen Worten, dass sämtliche mit federnd und/oder elastisch nachgiebigen Mittel versehenen und/oder gekoppelten Schraubverbindungen auf der dem Auslasskanal oder den Auslasskanälen im Zylinderkopf abgewandten bzw. gegenüberliegenden kalte Seite, die insbesondere eine Längsseite des Zylinderkopfes bzw. der Zylinderhaube ist, angeordnet sind und derart auf die Ventilhaube wirken, dass diese bei einem definierten Überdruck im Kurbelgehäuse lediglich dort, das heißt im Bereich der kalten Seite in einem definierten Maße von dem Zylinderkopf bzw. der Dichtung abhebt. Mit dieser Maßnahme wird erreicht, dass die Ventilhaube als solches als Überdruckventil wirkt, jedoch mit einer gezielten Abströmrichtung der Blow-by-Gase auf die kalte Seite der Brennkraftmaschine. Auf der eine heiße Seite der Brennkraftmaschine ausbildenden und der kalten Seite abgewandten bzw. gegenüberliegenden Seite des Zylinderkopfes bzw. der Ventilhaube, auf der ebenso wie auf den regelmäßig die beiden gegenüberliegenden Seiten stirnseitig verbindenden Stirn- bzw. Querseiten die festen Schraubverbindungen vorgesehen sind, bleibt der Dichtsitz und damit die Dichtwirkung unverändert aufrechterhalten.

Mittels dieser erfindungsgemäßen Maßnahme wird somit erreicht, dass die Ventilhaube bei einem definierten Überdruck nur gezielt an der kalten Motorseite abgehoben wird, so dass die abgeblasenen Gase lediglich im Bereich dieser kalten Motorseite ausströmen, wodurch die Gefahr einer Entzündung des Gases bzw. von Gasbestandteilen deutlich reduziert werden kann. Neben einem Benetzen von Teilen der Abgasanlage mit Motoröl kann somit mit der erfindungsgemäßen Lösung insbesondere auch einer Zerstörung der Haube vorgebeugt werden.

Wie bereits zuvor erwähnt, handelt es sich bei der bevorzugten Ausführungsform um mehrere, in Reihe liegende Zylinder, so dass die kalte Seite durch eine den Auslasskanälen gegenüberliegende Längsseite des Zylinderkopfes und/oder der Ventilhaube gebildet ist. Die dieser kalten Längsseite gegenüberliegende heiße Längsseite ist dann bei einem regelmäßig vorhandenen rechteck- bzw. kastenförmigen Aufbau von Zylinderkopf und/oder Zylinderhaube mit der kalten Längsseite über zwei endseitige bzw. stirnseitige Quer- bzw. Stirnseiten verbunden.

Bei einer querdurchströmten Brennkraftmaschine sind dabei die jeweils vorgesehenen Schraubverbindungen mit elastisch und/oder federnd nachgiebigen Mitteln auf der dann die kalte Seite ausbildenden Seite der Einlasskanäle im Zylinderkopf der Brennkraftmaschine positioniert, während bei einer Gegenstromspülung (Einlasskanäle und Auslasskanäle auf der gleichen Längsseite) dann die Schraubverbindungen mit elastisch und/oder federnd nachgiebigen Mitteln sämtlichen Kanälen bzw. beiden Kanalkategorien gegenüberliegend positioniert sind.

Abhängig von den konstruktiven Gegebenheiten kann es ausreichend sein, wenn nur die wenigstens eine Schraubverbindung an der besagten kalten Seite mit einem federnd und/oder elastisch nachgiebigen Mittel versehen bzw. gekoppelt ist. Gegebenenfalls können aber auch noch der kalten Seite nahe liegende Schraubverbindungen an den dort anschließenden Stirn- bzw. Querseiten mit einem elastisch und/oder federnd nachgiebigen Mittel versehen oder gekoppelt sein.

Das elastisch und/oder federnd nachgiebige Mittel kann jeder geeignete Kraftspeicher bzw. jedes geeignete Federelement sein, zum Beispiel ein gummielastisches Element, ein Tellerfederpaket, etc.. Bevorzugt wird jedoch vorgeschlagen, dass das elastisch und/oder federnd nachgiebige Mittel durch wenigstens ein Federelement, insbesondere ein Druckfederelement wie zum Beispiel eine Schraubendruckfeder aus z. B. Federstahl, gebildet ist, das in die jeweilige Schraubverbindung dergestalt integriert ist, dass diese im montierten Grundzustand einen an dem Zylinderkopf an- und/oder aufliegenden Ventilhauben-Auflagebereich mit einer definierten Vorspannkraft in Richtung Zylinderkopf vorspannt, wobei dieser Ventilhauben-Auflagebereich bei einem definierten Überdruck gegen die Kraft des Federelementes von dem Zylinderkopf abhebt. Insbesondere Schraubendruckfedern als Federelemente sind auf eine geforderte Federrate gut abstimmbar, robust, alterungsbeständig und temperaturresistent.

Gemäß einer besonders bevorzugten Ausgestaltung hierzu wird vorgeschlagen, dass die Schraubverbindung einen Schraubbolzen aufweist, der durch den zum Beispiel durch einen Randflansch gebildeten Ventilhauben-Auflagebereich der Ventilhaube hindurch in den Zylinderkopf eingeschraubt ist, wobei das Federelement von einem den Ventilhauben-Auflagebereich um ein definiertes und/oder vorgegebenes Maß überragenden Bolzenschaft des Schraubenbolzens dergestalt durchgriffen ist, dass das Federelement jeweils mittelbar oder unmittelbar zwischen einem bolzenschaftseitigen Anschlagelement einerseits und dem Ventilhauben-Auflagebereich andererseits verspannt ist und eine definierte bzw. vorgegebene Anpresskraft als Vorspannkraft auf den Ventilhauben-Auflagebereich ausübt. Mit einer derartigen Ausgestaltung wird auf einfache Weise eine funktionssichere Schraubverbindung im Grundzustand zur Verfügung gestellt, die die feste Anbindung der Ventilhaube in der gewünschten Weise an dem Zylinderkopf ermöglicht. Andererseits wird aber auch eine funktionssichere Abhebefunktion bei definierter Überdruckbeanspruchung in der zuvor beschriebenen Art und Weise zur Verfügung gestellt.

Gemäß einer ersten besonders bevorzugt konkreten Ausgestaltung der Erfindungsidee wird vorgeschlagen, dass das bolzenschaftseitige Anschlagelement durch einen Schraubenkopf des Schraubenbolzens oder durch eine auf einen Schraubenbolzen aufschraubbare Schraubenmutter oder durch wenigstens einen bolzenschaftseitigen Vorsprung, zum Beispiel eine Abstufung bzw. einen Ringbund oder dergleichen, gebildet ist, an dem oder der sich das Federelement abstützt. Dadurch ergeben sich vielfältige konstruktive Ausgestaltungen, die auf den jeweiligen Einsatzfall einfachst anzupassen sind.

Besonders bevorzugt ist dabei eine Ausgestaltung, bei der sich das Federelement an dem Ventilhauben-Auflagebereich mittelbar über eine von dem Bolzenschaft des Schraubbolzens durchgriffene, federtellerartige Scheibe abstützt. Diese Scheibe hat neben ihrer Federtellerfunktion auch grundsätzlich eine Funktion wie eine Beilagscheibe bzw. Unterlagscheibe und ist lose verschiebbar am Bolzenschaft des Schraubbolzens geführt. Insgesamt ergibt sich somit mit einem derartigen Aufbau eine besonders stabile und funktionssichere Festlegung einerseits sowie andererseits auch eine Funktionssicherheit beim Abheben des jeweils gewünschten Ventilhaubenbereichs.

Gemäß einer weiteren besonders bevorzugten Ausgestaltung wird vorgeschlagen, dass der Bolzenschaft des Schraubbolzens von einer Hülse, insbesondere einer Druckhülse umgeben ist, die bei montierter Schraubverbindung mittelbar oder unmittelbar zwischen dem Zylinderkopf einerseits und einem Schraubenkopf bzw. einer Schraubenmutter des Schraubenbolzens andererseits verspannt ist. Mit einer derartigen Hülse kann auf besonders einfache Weise die Vorspannkraft aufgenommen werden.

Das Federelement kann gemäß einer alternativen Ausgestaltung hierzu jeweils zwischen zwei Federtellern eingespannt sein, die auf einen Schraubenbolzen oder Schraubenschaft aufgesteckt sind. Ferner können die Federteller jeweils einen büchsenförmigen, in den Innenumfang der Schraubendruckfeder einragenden Führungsabschnitt und einen radial abragenden Auflagering aufweisen. Damit sind die Federn schwingungsresistent in ihrer Lage gehalten, wobei die Führungsabschnitte zugleich als Ausfederanschläge für die Ventilhaube dienen können.

In montagegünstiger Weise kann der jeweilige Schraubenbolzen in Gewindebohrung des Zylinderkopfes fest eingeschraubt sein, wobei die Federteller mit der Schraubendruckfeder jeweils mittels einer selbstsichernden Schraubenmutter zusammengespannt sind (die Verwendung einer zusätzlichen Kontermutter wäre ebenfalls möglich).

Des Weiteren kann jeweils zwischen dem unteren Federteller und dem zugewandtem Ventilhauben-Auflagebereich, zum Beispiel einem Flansch, der Ventilhaube eine Dämpfungsscheibe eingesetzt sein, die neben einer zusätzlichen Dichtfunktion im regulären Motorbetrieb auch potenzielle Schwingungsanregungen dämpft.

Schließlich kann die Ventilhaube zumindest im Bereich der wenigstens einen mit einem federnd und/oder elastisch nachgiebigen Mittel versehenen und/oder gekoppelten Schraubverbindung elastisch ausgebildet und/oder aus einem in definierten bzw. vorgegebenen Grenzen elastisch verformbaren Material, insbesondere einem Kunststoffmaterial, hergestellt sein. Dadurch kann die Ventilhaube gezielt auch auf geringe Druckbelastungen ausgelegt werden, so dass die Ventilhaube im Rahmen von deren Bauteilelastizität und/oder in Verbindung mit dem elastisch und/oder federnd nachgiebigen Mittel eine gezielte Abblasfunktion ermöglicht.

Die Ventilhaube ist bevorzugt als den gesamten Zylinderkopf umspannende materialeinheitliche und/oder einstückige Haube ausgelegt, könnte grundsätzlich aber auch durch mehrere separate Einzelhauben ausgebildet sein, die einem oder mehreren Zylindern zugeordnet sind.

Die Dichtung zwischen Zylinderkopf und Ventilhaube ist bevorzugt lose zwischen diesen angeordnet, wodurch die Dichtung bei einem Abheben der Ventilhaube in diesem Bereich ausgeblasen bzw. beschädigt werden kann. Gemäß einer hierzu alternativen Ausgestaltung wird vorgeschlagen, dass die Dichtung in der montierten Grundposition wenigstens im Bereich der wenigstens einen, mit einem federnd und/oder elastisch nachgiebig wirkenden Mittel gekoppelten und/oder versehenen Schraubverbindung fest mit dem Zylinderkopf und/oder der Vetilhaube verbunden ist oder zumindest dort gehaltert ist, so dass diese beim Ausblasen der Blow-by-Gase und beim Abheben der Ventilhaube im wesentlichen in der Grundposition verbleibt und damit der Dichtsitz bzw. die Dichtung nicht beeinträchtigt bzw. zerstört wird. Die Dichtung kann in diesem Fall z.B. mit dem Zylinderkopf oder der Ventilhaube verklebt sein oder aber auch auf andere Weise dort stoff- und/oder kraft- und/oder formschlüssig gehaltert sein, z.B. in entsprechenden Nutkanälen geführt und/oder verklemmt sein.

Ein Ausführungsbeispiel der Erfindung ist im Folgenden mit weiteren Einzelheiten näher erläutert. Die schematische Zeichnung zeigt in:
- Fig. 1: eine beispielhafte und skizzenhafte Ansicht auf einen Zylinderkopf und eine Ventilhaube einer Reihen-Brennkraftmaschine nach dem Querstromprinzip, mit einer teilweise festen und teilweise federnd nachgiebigen Schraubverbindung an der Ventilhaube;

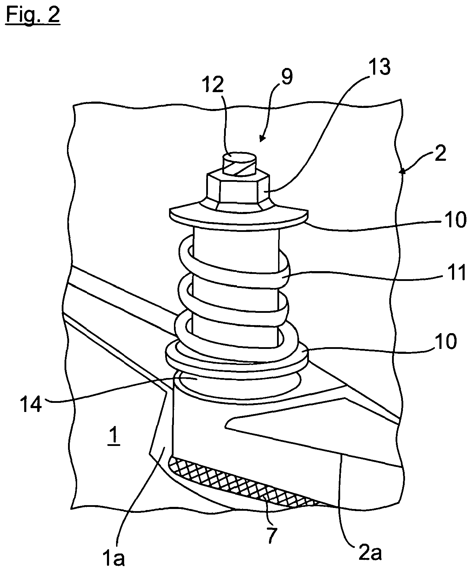

- Fig. 2: eine der federnd nachgiebigen Schraubverbindungen zwischen Zylinderkopf und Ventilhaube in raumbildlicher Darstellung;
- Fig. 3a: einen Schnitt gemäß Linie III-III der Fig. 1 durch eine der mit einem federnd nachgiebigen Mittel gekoppelte Schraubverbindungen mit einer zwischen einem Schraubenkopf und einer auf einem Flansch als Ventilhauben-Auflagebereich aufliegenden Scheibe verspannten Druckfederelement;
- Fig. 3b: die Darstellung gemäß Fig. 3a mit im Überdruckfall abgehobener Ventilhaube;
- Fig. 4: einen Schnitt gemäß Linie IV - IV der Fig. 1 durch eine der mit einem federnd nachgiebigen Mittel gekoppelte Schraubverbindungen mit einer zwischen zwei Federtellern eingespannten Schraubendruckfeder.

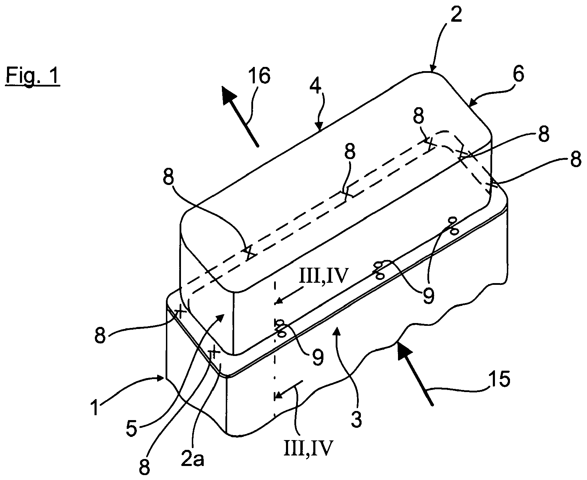

In der Fig. 1 ist der Zylinderkopf 1 einer Reihen-Brennkraftmaschine mit zum Beispiel vier Zylindern teilweise angedeutet. Dieser Zylinderkopf 1 ist nach oben von einer Ventilhaube 2 abdeckt. Der Zylinderkopf 1 und die Ventilhaube 2 sind in Draufsicht gesehen etwa rechteckförmig, mit zwei Längsseiten 3, 4 und zwei Querseiten 5, 6.

In dem Zylinderkopf 1 sind je Zylinder der Brennkraftmaschine in nicht dargestellter Weise Einlassventile und Auslassventile vorgesehen, die an Einlasskanäle und Auslasskanäle angrenzen und über eine nicht dargestellte Ventilsteuerung betätigt sind. Die Anordnung der Gaswechselventile und der besagten Einlass- und Auslasskanäle ist so gewählt, dass der Gaswechsel im Querstromprinzip erfolgt; das heißt, von der Längsseite 3 als Einlassseite (= kalte Motorseite) zur Längsseite 4 als Auslassseite (= heiße Motorseite), gemäß den in Fig. 1 eingezeichneten Pfeilen 15 und 16.

An die Einlasskanäle schließen in bekannter Weise ein Luftverteilerrohr, Verbrennungsluftleitungen, Ladedruckleitungen, etc. an, während an die Auslasskanäle Abgaskrümmer, Abgasleitungen, gegebenenfalls die Turbine eines Abgasturboladers, etc. angeschlossen sind.

Die nicht weiter dargestellte Brennkraftmaschine weist eine Kurbelgehäuseentlüftung auf, mit zumindest einer inneren Verbindung vom Zylinder-Kurbelgehäuse zum Zylinderkopf 1, über die die Blow-by-Gase in bekannter Weise zum Ansaugsystem abgeführt werden.

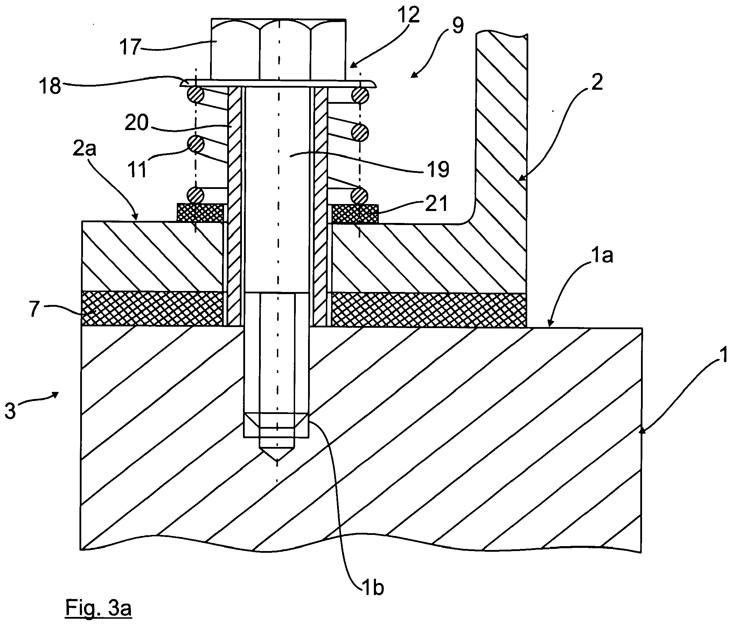

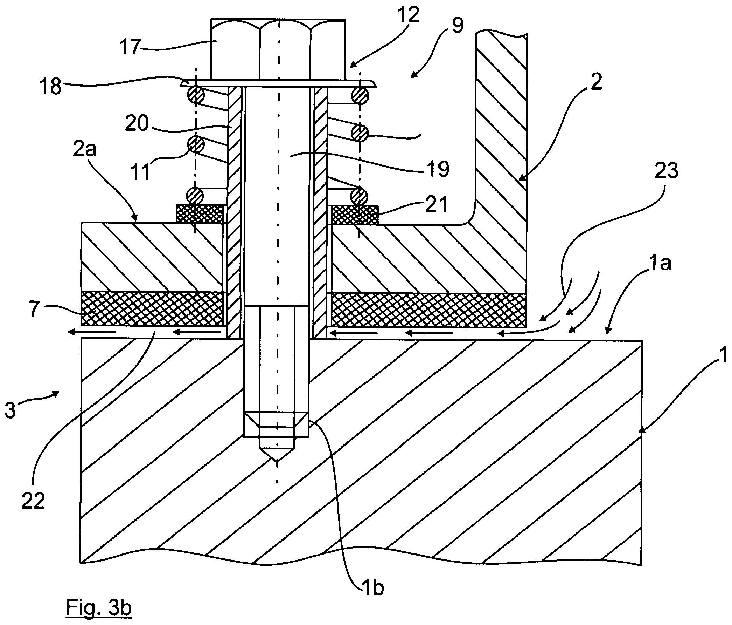

Die Ventilhaube 2 aus Kunststoff weist einen nach außen kragenden, umlaufenden Flansch 2a als Ventilhauben-Auflagebereich mit entsprechenden Bohrungen auf, über den sie unter Zwischenschaltung einer Dichtung 7 (Fig. 3) dicht auf einer flächigen Auflage 1a des Zylinderkopfes 1 mittels mehrerer, fester Schraubverbindungen 8 (in Fig. 1 als Kreuz eingezeichnet) und mit elastisch und/oder federnd nachgiebigen Mittel gekoppelten Schraubverbindungen 9 befestigt ist.

Die festen Schraubverbindungen 8 (Fig. 1) sind durch bekannte Befestigungsmittel wie zum Beispiel in Gewindebohrungen des Zylinderkopfes 1 eingeschraubte Schrauben oder durch feste Schraubenbolzen und aufgeschraubte Schraubenmuttern unter Zwischenlage von Beilagscheiben gebildet (nicht dargestellt). Die festen Schraubverbindungen 8 sind an der "heißen" Längsseite 4 (an der den Abgaskanälen im Zylinderkopf 1 zugewandten Längsseite) und an den Stirn- bzw. Querseiten 5 und 6 in derartiger Anzahl und in derartigen Abständen zueinander angeordnet, dass eine dichte, gleichmäßige Anlage der Ventilhaube 2 am Zylinderkopf 1 gewährleistet ist.

An der "kalten" Längsseite 3 (an der Längsseite der Einlasskanäle) sind die federnd nachgiebigen Schraubverbindungen 9 vorgesehen, die nachfolgend näher beschrieben sind.

In den Fig. 3a, 3b ist eine besonders bevorzugte erfindungsgemäße Ausgestaltung einer mit einem federnd nachgiebigen Mittel versehenen bzw. gekoppelten Schraubverbindung 9 gezeigt, die sich im Wesentlichen aus einer hier beispielhaft als Schraubendruckfeder 11 ausgebildeten Feder und einem in den Zylinderkopf 1 fest eingesetzten bzw. eingeschraubten Schraubenbolzen 12 zusammensetzt. Der Schraubenbolzen 12 weist einen Schraubenkopf 17 mit einem Schraubenkopf-Ringbund 18 auf. Von dem Schraubenkopf 17 bzw. Ringbund 18 ausgehend erstreckt sich ein Bolzenschaft 19, der einen endseitigen Gewindeansatz aufweist, durch einen hier als Flansch 2a ausgebildeten Ventilhauben-Auflagebereich der Ventilhaube 2 sowie eine Dichtung 7 hindurch bis zum Zylinderkopf 1. Um bei der Verschraubung des Schraubbolzens 12 eine definierte Vorspannkraft aufbringen zu können, ist der Bolzenschaft 19 von einer Druckhülse 20 umgeben bzw. durchgreift der Schraubbolzen 12 mit seinem Bolzenschaft 19 diese Druckhülse 20, die sich zwischen dem Ringbund 18 des Schraubenkopfes 17 und einem Randbereich um die Gewindebohrung 1b herum abstützt.

Um die Druckhülse 20 herum ist ferner eine Scheibe 21 angeordnet, die bevorzugt als flache, ebene Scheibe ausgebildet ist und weiter bevorzugt in einer flächigen Anlageverbindung auf dem Flansch 2a aufliegt.

Zwischen der Scheibe 21 und einer Unterseite des Ringbunds 18 des Schraubenkopfes 17 erstreckt sich die Schraubendruckfeder 11, die somit im in der Fig. 3a gezeigten montierten Zustand den Flansch 2a mit einer definierten Anpresskraft als Vorspannkraft in Richtung auf die Auflagefläche 1a des Zylinderkopfes 1 drückt.

Sollte es nunmehr im Inneren der Ventilhaube 2 zu einem Aufbau eines definierten Überdrucks kommen, kann die Ventilhaube 2 im Bereich der Schraubverbindungen 9 an der kalten Längsseite 3 als Überdruckventil wirkend von der Auflagefläche 1a des Zylinderkopfes 1 weg gegen die Kraft der Schraubendruckfeder 11 abgehoben werden, wodurch ein Spalt 22 (Fig. 3b) zwischen der Ventilhaube 2 bzw. dem Flansch 2a derselben und dem Zylinderkopf 1 ausgebildet wird, durch den die Gase 23 zur Druckentlastung entweichen können. Dies ist lediglich schematisch und beispielhaft in der Fig. 3b dargestellt.

Diese Druckentlastung führt dazu, dass größere Schäden an der Brennkraftmaschine, wie zum Beispiel ein Bersten der Ventilhaube 2 und damit verbundene Auswirkungen vermieden werden können. Um dieses Abheben zu ermöglichen, ist bevorzugt vorgesehen, dass die Ventilhaube 2 in einem definierten Maße auch elastisch verformbar ausgebildet ist. An dieser Stelle sei weiter erwähnt, dass die Dichtung 7 bei lose verlegter Dichtung 7 auch nicht oder nur teilweise von dem Zylinderkopf 1 abheben kann und dementsprechend dann der Spalt 22 auch zwischen der Dichtung 7 und der Ventilhaube 2 ausgebildet sein kann. Die Dichtung 7 wird bei derartig loser verlegter Dichtung 7 regelmäßig ausgeblasen, so dass die Dichtung 7 zu deren positioniermäßiger Festlegung ggf. auch im Bereich der Ventilhaube 2 oder des Zylinderkopfes 1 wenigstens bereichsweise gehaltert und/oder festgelegt sein kann, z.B. durch jede geeignete stoff- und/oder kraft- und/oder formschlüssige Verbindung.

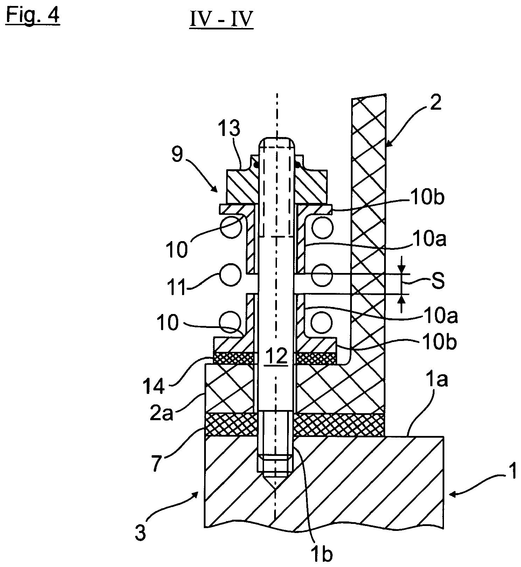

Gemäß einer in der Fig. 4 gezeigten alternativen Ausführungsform setzt sich eine mit einem federnd nachgiebigen Mittel versehene und/oder gekoppelte Schraubverbindung 9 im Wesentlichen zusammen aus einer zwischen zwei Federtellern 10 eingespannten Schraubendruckfeder 11 aus einem Federstahl definierter Federkonstante und einem in den Zylinderkopf 1 fest eingesetzten Schraubenbolzen 12 mit einer aufgeschraubten, selbstsichernd ausgeführten Schraubenmutter 13.

Die Federteller 10 sind im Querschnitt (Fig. 3) hutförmig ausgeführt und weisen hier jeweils einen büchsenförmigen Führungsabschnitt 10a und einen radial abragenden Auflagering 10b auf. Der Führungsabschnitt 10a ist auf dem Schaft des Schraubenbolzens 12 im Wesentlichen formschlüssig bzw. mit einem definierten Ringspaltabstand geführt und bildet zugleich eine äußere Führung für die ihn umgebende Schraubendruckfeder 11.

Der Schraubenbolzen 12 ist in eine im Zylinderkopf 1 an dessen Auflagefläche 1a eingearbeitete Gewindebohrung 1b fest eingeschraubt und weist einen nach oben abragenden Schaft auf, auf den in Montagefolge nach Auflegen der Dichtung 7 (die gegebenenfalls mit dem Zylinderkopf 1 wenigstens in den Teilbereichen der Schraubverbindungen 9 fest verklebt oder auf andere Weise dort form- und/oder stoff- und/oder kraftschlüssig gehalten wird) und Aufsetzen der Ventilhaube 2 mit dem Flansch 2a eine Dämpfungsscheibe 14, der untere Federteller 10 mit nach oben weisendem Führungsabschnitt 10a, die Schraubendruckfeder 11 und der obere Federteller 10 mit nach unten ragendem Führungsabschnitt 10a aufgeschoben sind. Danach wird die Schraubenmutter 13 aufgebracht.

Die Schraubenmutter 13 dieser Schraubverbindung 9 wird so aufgeschraubt, dass bei einer definierten Vorspannung der Schraubendruckfeder 11 noch ein axialer Abstand s zwischen den Führungsabschnitten 10a der Federteller 10 verbleibt, der ein Abheben der Längsseite 3 der Ventilhaube 2 bei einem definierten Überdruck innerhalb der Ventilhaube 2 zulässt. Die einander zugewandten Stirnseiten der Führungsabschnitte 10a können gegebenenfalls als Ausfederanschlag dienen.

Daraus resultiert, dass bei dem besagten definierten Überdruck die "heiße" Längsseite 4 und im Wesentlichen die Querseiten 5 und 6 der Ventilhaube 2 dicht bleiben, während die Ventilhaube 2 an der "kalten" Längsseite 3 als Überdruckventil wirkend abhebt und eine Druckentlastung herbeiführt, die dazu beiträgt, dass größere Schäden an der Brennkraftmaschine wie zum Beispiel ein Bersten der Ventilhaube 2 und damit verbundener Auswirkungen vermieden sind. Hierzu ist die Ventilhaube 2 bevorzugt in einem definierten Maße elastisch verformbar ausgebildet.

Die Erfindung ist nicht auf die beschriebenen Ausführungsbeispiele beschränkt. Vielmehr sind dem Fachmann geläufige Abwandlungen im Rahmen der Patentansprüche möglich.

Zum Beispiel kann bei den mit einem federnd nachgiebigen Mittel versehenen Schraubverbindung 9 gemäß Fig. 4 anstatt einer selbstsichernden Schraubenmutter 13 eine einfache Schraubenmutter und eine zweite Kontermutter verwendet sein. Anstelle eines festen Schraubenbolzens 12 könnten auch selbstsichernde oder zusätzlich gesicherte Schrauben entsprechender Länge verwendet sein.

Neben der bevorzugten Verwendung von Schraubendruckfedern 11 in den zuvor beschriebenen Ausführungsformen könnten auch gummielastische Federelemente, Tellerfederpakete oder anderweitige Federelemente eingesetzt sein, die ein gezieltes Abheben der besagten Längsseite 3 der Ventilhaube 2 ermöglichen.

**Bezugszeichenliste**

| | | | |
|---|---|---|---|
| 1 | Zylinderkopf | 22 | Spalt |
| 1a | Auflagefläche | 23 | Blow-by-Gase |
| 1b | Gewindebohrungen | | |
| 2 | Ventilhaube | | |
| 2a | Flansch | | |
| 3 | "kalte" Längsseite | | |
| 4 | "heiße" Längsseite | | |
| 5 | Querseite | | |
| 6 | Querseite | | |
| 7 | Dichtung | | |
| 8 | feste Schraubverbindungen | | |
| 9 | mit federnd nachgiebigen Mitteln gekoppelte Schraubverbindungen | | |
| 10 | Federteller | | |
| 10a | Führungsabschnitte | | |
| 10b | Auflagering | | |
| 11 | Schraubendruckfeder | | |
| 12 | Schraubenbolzen | | |
| 13 | Schraubenmutter | | |
| 14 | Dämpfungsscheibe | | |
| 15 | Einlasspfeil | | |
| 16 | Auslasspfeil | | |
| 17 | Schraubenkopf | | |
| 18 | Ringbund | | |
| 19 | Bolzenschaft | | |
| 20 | Druckhülse | | |
| 21 | Scheibe | | |

## Patentansprüche

1. Brennkraftmaschine, mit wenigstens einem Zylinder und einer Anordnung einer Ventilhaube am Zylinderkopf der Brennkraftmaschine, wobei der Zylinderkopf über eine Ventilsteuerung betätigbare Gaswechselventile aufweist, die mit wenigstens einem Einlass- und Auslasskanal verbunden sind, und wobei wenigstens eine den Zylinderkopf nach oben abschließende und über zumindest eine Strömungsverbindung mit dem Kurbelgehäuse der Brennkraftmaschine mittelbar oder unmittelbar verbundene Ventilhaube, vorzugsweise unter Zwischenschaltung einer umlaufenden Dichtung, mittels mehrerer Schraubverbindungen auf dem Zylinderkopf festgelegt ist, **dadurch gekennzeichnet, dass** wenigstens ein Teil der vorgesehenen Schraubverbindungen (9) auf einer dem wenigstens einen Auslasskanal im Zylinderkopf (1) abgewandten und damit einer kalten Motorseite zugewandten kalten Seite (3) des Zylinderkopfes (1) derart mit einem federnd und/oder elastisch nachgiebigen Mittel (11) versehen und/oder gekoppelt ist, dass die Ventilhaube (2) bei einem definierten Überdruck im Kurbelgehäuse mit einem definierten Haubenbereich lediglich im Bereich dieser kalten Seite (3) von dem Zylinderkopf (1) abhebt.

2. Brennkraftmaschine nach Anspruch 1, **dadurch gekennzeichnet, dass** mehrere, in Reihe liegende Zylinder vorgesehen sind, so dass die kalte Seite (3) durch eine den Auslasskanälen gegenüberliegende Längsseite des Zylinderkopfes (1) und/oder der Ventilhaube (2) gebildet ist.

3. Brennkraftmaschine nach Anspruch 1 oder 2, **dadurch gekennzeichnet, dass** bei einer querdurchströmten Brennkraftmaschine die wenigstens eine mit einem federnd und/oder elastisch nachgiebigen Mittel (11) versehene und/oder gekoppelte Schraubverbindung (9) auf der dem wenigstens einen Einlasskanal im Zylinderkopf (1) zugewandten und die kalte Seite (3) ausbildenden Seite der Brennkraftmaschine positioniert ist.

4. Brennkraftmaschine nach einem der vorhergehenden Ansprüche, **dadurch gekennzeichnet, dass** zusätzlich zu der wenigstens einen mit einem federnd und/oder elastisch nachgiebigen Mittel (11) versehenen und/oder gekoppelten Schraubverbindung (9) auf der kalten Seite (3) auch wenigstens ein Teil der Schraubverbindungen, insbesondere wenigstens eine der kalten Seite (3) unmittelbar benachbarte Schraubverbindung, an den sich an die kalte Seite (3) im wesentlichen in Querrichtung sowie an deren gegenüberliegenden Enden anschließenden Seiten mit wenigstens einem federnd und/oder elastisch nachgiebigen Mittel gekoppelt und/oder versehen ist.

5. Brennkraftmaschine nach einem der vorhergehenden Ansprüche, **dadurch gekennzeichnet, dass** das federnd und/oder elastisch nachgiebige Mittel (11) ein Federelement, insbesondere ein Druckfederelement bzw. eine Schraubendruckfeder, aufweist oder durch ein solches gebildet ist, das mit der jeweils zugeordneten Schraubverbindung (9) dergestalt gekoppelt ist, dass das Federelement im montierten Grundzustand einen an dem Zylinderkopf (1) an- und/oder aufliegenden Ventilhauben-Auflagebereich (2a) mit einer definierten Vorspannkraft in Richtung Zylinderkopf (1) vorspannt, wobei dieser Ventilhauben-Auflagebereich (2a) bei einem definierten Überdruck gegen die Kraft des Federelementes von dem Zylinderkopf (1) abhebt.

6. Brennkraftmaschine nach Anspruch 5, **dadurch gekennzeichnet, dass** die Schraubverbindung (9) einen Schraubbolzen (12) aufweist, der durch den Ventilhauben-Auflagebereich (2a) hindurch in den Zylinderkopf (1) eingeschraubt ist, wobei das Druckfederelement (11) von einem, den Ventilhauben-Auflagebereich (2a) um ein definiertes und/oder vorgegebenes Maß überragenden Bolzenschaft (19) des Schraubenbolzens (12) dergestalt durchgriffen ist, dass das Federelement (11), jeweils mittelbar oder
unmittelbar, zwischen einem bolzenschaftseitigen Anschlagelement (17, 18) einerseits und dem Ventilhauben-Auflagebereich (2a) andererseits verspannt ist und eine definierte und/oder vorgegebene Anpresskraft auf den Ventilhauben-Auflagebereich (2a) in Richtung Zylinderkopf (1) ausübt.

7. Brennkraftmaschine nach Anspruch 6, **dadurch gekennzeichnet, dass** das bolzenschaftseitige Anschlagelement durch einen Schraubenkopf (17, 18) des Schraubenbolzens (12) oder durch eine auf einen Schraubenbolzen aufschraubbare Schraubenmutter (13) oder durch wenigstens einen bolzenschaftseitigen Vorsprung, insbesondere eine Abstufung und/oder einen Ringbund, gebildet ist, an dem oder der sich das Federelement (11) abstützt.

8. Brennkraftmaschine nach Anspruch 6 oder 7, **dadurch gekennzeichnet, dass** sich das Federelement (11) an dem Ventilhauben-Auflagebereich (2a) mittelbar über eine von dem Bolzenschaft (19) des Schraubbolzens (12) durchgriffene federtellerartige Scheibe (21) abstützt.

9. Brennkraftmaschine nach einem der Ansprüche 6 bis 8, **dadurch gekennzeichnet, dass** der Bolzenschaft (19) des Schraubbolzens (12) von einer starren Buchse oder Hülse (20) umgeben ist, die bei montierter Schraubverbindung (9) als Druckhülse mittelbar oder unmittelbar zwischen dem Zylinderkopf (1) einerseits und einem Schraubenkopf (17, 18) oder einer Schraubenmutter des Schraubbolzens andererseits verspannt ist.

10. Brennkraftmaschine nach Anspruch 5, **dadurch gekennzeichnet, dass** das Federelement (11) zwischen zwei Federtellern (10) eingespannt ist, die auf einen Schraubenbolzen (12) aufgesteckt sind, wobei die Federteller (10) einen büchsenförmigen, in den Innenumfang des Druckfederelements (11) einragenden Führungsabschnitt (10a) und einen radial abragenden Auflagering (10b) aufweisen.

11. Brennkraftmaschine nach Anspruch 10, **dadurch gekennzeichnet, dass** der Schraubenbolzen (12) in eine Gewindebohrung (1b) des Zylinderkopfes (1) fest eingeschraubt ist, wobei die Federteller (10) mit dem Federelement (11) mittels einer selbstsichernden Schraubenmutter (13) zusammengespannt sind.

12. Brennkraftmaschine nach Anspruch 10 oder 11, **dadurch gekennzeichnet, dass** zwischen einem in der Einbaulage unteren Federteller (10) und dem Ventilhauben-Auflagebereich (2a) der Ventilhaube (2) eine Dämpfungsscheibe (14) eingesetzt ist.

13. Brennkraftmaschine nach einem der vorhergehenden Ansprüche, **dadurch gekennzeichnet, dass** die Ventilhaube (2) zumindest im Bereich der wenigstens einen mit einem federnd und/oder elastisch nachgiebigen Mittel versehenen und/oder gekoppelten Schraubverbindung (9) elastisch ausgebildet und/oder aus einem elastisch verformbaren Material hergestellt ist.

14. Brennkraftmaschine nach einem der vorhergehenden Ansprüche, **dadurch gekennzeichnet, dass** die Ventilhaube (2) als den gesamten Zylinderkopf (1) umspannende, materialeinheitlich und/oder einstückig ausgebildete Haube ausgebildet ist.

15. Brennkraftmaschine nach einem der vorhergehenden Ansprüche, **dadurch gekennzeichnet, dass** die Dichtung (7) in der montierten Grundposition lose zwischen dem Zylinderkopf (1) und der Ventilhaube (2) angeordnet ist oder dass die Dichtung (7) wenigstens im Bereich der mit wenigstens einem federnd und/oder elastisch nachgiebig wirkenden Mittel gekoppelten und/oder versehenen Schraubverbindung (9) form- und/oder kraft- und/oder stoffschlüssig mit dem Zylinderkopf (1) und/oder der Ventilhaube (2) verbunden ist.

## Claims

1. Internal combustion engine having at least one cylinder and having an arrangement of a valve cover on the cylinder head of the internal combustion engine, wherein the cylinder head has gas exchange valves, which can be actuated by means of a valve timing system and are connected to at least one inlet and one exhaust port, and wherein at least one valve cover, which closes off the cylinder head at the top and is connected directly or indirectly, by means of at least one flow connection, to the crankcase of the internal combustion engine, is fixed on the cylinder head by means of a plurality of screwed joints, preferably with a circumferential gasket inserted in between, **characterized in that** at least some of the screwed joints (9) provided are provided and/or coupled in such a way with a resiliently and/or elastically flexible means (11) on a cold side (3) of the cylinder head (1), which faces away from the at least one exhaust port in the cylinder head (1) and hence faces a cold side of the engine, that the valve cover (2) lifts off from the cylinder head (1) in a defined area of the cover only in the area of said cold side (3) when there is a defined excess pressure in the crankcase.

2. Internal combustion engine according to Claim 1, **characterized in that** a plurality of cylinders arranged in line is provided, with the result that the cold side (3) is formed by an opposite longitudinal side of the cylinder head (1) and/or of the valve cover (2) from the exhaust ports.

3. Internal combustion engine according to Claim 1 or 2, **characterized in that**, in the case of a cross-flow internal combustion engine, the at least one screwed joint (9) provided and/or coupled with a resiliently and/or elastically flexible means (11) is positioned on that side of the internal combustion engine which faces the at least one inlet port in the cylinder head (1) and forms the cold side (3).

4. Internal combustion engine according to one of the preceding claims, **characterized in that,** in addition to the at least one screwed joint (9) provided and/or coupled with a resiliently and/or elastically flexible means (11) and situated on the cold side (3), at least some of the screwed joints, in particular at least one screwed joint directly adjacent to the cold side (3), is/are also coupled and/or provided with at least one resiliently and/or elastically flexible means on the sides which adjoin the cold side (3) substantially in a transverse direction and at the opposite ends thereof.

5. Internal combustion engine according to one of the preceding claims, **characterized in that** the resiliently and/or elastically flexible means (11) has a spring element, in particular a compression spring element or a helical compression spring, or is formed by such a spring element, which is coupled with the respectively associated screwed joint (9) in such a way that, in the assembled normal state, the spring element preloads a valve-cover bearing area (2a), which rests against and/or on the cylinder head (1), with a defined preloading force in the direction of the cylinder head (1), wherein this valve-cover bearing area (2a) lifts off from the cylinder head (1) against the force of the spring element at a defined excess pressure.

6. Internal combustion engine according to Claim 5, **characterized in that** the screwed joint (9) has a screw bolt (12), which is screwed into the cylinder head (1) through the valve-cover bearing area (2a), and a bolt shank (19) of the screw bolt (12), which bolt shank projects above the valve-cover bearing area (2a) by a defined and/or predetermined amount, passes through the compression spring element (11) in such a way that the spring element (11) is clamped, in each case directly or indirectly, between a stop element (17, 18) on the bolt shank side, on the one hand, and the valve-cover bearing area (2a), on the other hand, and exerts a defined and/or predetermined contact force on the valve-cover bearing area (2a) in the direction of the cylinder head (1).

7. Internal combustion engine according to Claim 6, **characterized in that** the stop element on the bolt shank side is formed by a screw head (17, 18) of the screw bolt (12) or by a screw nut (13) that can be screwed onto a screw bolt or by at least one projection on the bolt shank side, in particular a step and/or an annular collar, on which the spring element (11) is supported.

8. Internal combustion engine according to Claim 6 or 7, **characterized in that** the spring element (11) is supported indirectly on the valve-cover bearing area (2a) via a disc (21) of the spring-plate type, through which the bolt shank (19) of the screw bolt (12) passes.

9. Internal combustion engine according to one of Claims 6 to 8, **characterized in that** the bolt shank (19) of the screw bolt (12) is surrounded by a rigid bush or sleeve (20), which, when the screwed joint (9) is assembled, is clamped as a compression sleeve directly or indirectly between the cylinder head (1), on the one hand, and a screw head (17, 18) or a screw nut of the screw bolt, on the other hand.

10. Internal combustion engine according to Claim 5, **characterized in that** the spring element (11) is clamped between two spring plates (10), which are mounted on a screw bolt (12), wherein the spring plates (10) have a bush-shaped guide section (10a), which projects into the interior of the compression spring element (11), and a radially projecting bearing ring (10b).

11. Internal combustion engine according to Claim 10, **characterized in that** the screw bolt (12) is screwed securely into a threaded hole (1b) in the cylinder head (1), the spring plate (10) being clamped to the spring element (11) by means of a self-locking screw nut (13).

12. Internal combustion engine according to Claim 10 or 11, **characterized in that** a damping disc (14) is inserted between a spring plate (10), which is at the bottom in the installed position, and the valve-cover bearing area (2a) of the valve cover (2).

13. Internal combustion engine according to one of the preceding claims, **characterized in that** the valve cover (2) is of elastic design and/or is produced from a material capable of elastic deformation, at least in the area of the at least one screwed joint (9) provided and/or coupled with a resiliently and/or elastically flexible means.

14. Internal combustion engine according to one of the preceding claims, **characterized in that** the valve cover (2) is designed as a cover which fits around the entire cylinder head (1) and is made from a single material and/or is of integral design.

15. Internal combustion engine according to one of the preceding claims, **characterized in that,** in the mounted normal position, the gasket (7) is arranged loosely between the cylinder head (1) and the valve cover (2), or **in that** the gasket (7) is connected positively and/or nonpositively and/or materially to the cylinder head (1) and/or the valve cover (2), at least in the area of the screwed joint (9) coupled and/or provided with at least one means that has a resiliently or elastically flexible action.

## Revendications

1. Moteur à combustion interne, comprenant au moins un cylindre et un agencement de chapeau de soupape au niveau de la tête de cylindre du moteur à combustion interne, la tête de cylindre présentant des soupapes d'alternance de gaz actionnables par l'intermédiaire d'une commande de soupape et qui sont raccordées à au moins un canal d'entrée et de sortie, et au moins un chapeau de soupape délimitant la tête de cylindre vers le haut et raccordé directement ou indirectement par au moins un raccordement d'écoulement au carter du moteur à combustion interne, de préférence avec interposition d'un joint périphérique étant fixé au moyen de plusieurs vissages sur la tête de cylindre, **caractérisé en ce qu'**au moins une partie des vissages prévus (9), sur un côté froid (3) détourné de l'au moins un canal de sortie dans la tête de cylindre (1) et ainsi tourné vers un côté froid du moteur de la tête de cylindre (1), est pourvue d'un et/ou couplée à un moyen (11) flexible par ressort et/ou élastiquement de manière à ce que le chapeau de soupape (2), dans le cas d'une surpression définie dans le carter, se soulève de la tête de cylindre (1) avec une partie définie du chapeau simplement au niveau de ce côté froid (3).

2. Moteur à combustion interne selon la revendication 1, **caractérisé en ce qu'**il est prévu plusieurs cylindres positionnés en série, de sorte que le côté froid (3) est constitué par un côté longitudinal opposé aux canaux de sortie de la tête de cylindre (1) et/ou du chapeau de soupape (2).

3. Moteur à combustion interne selon la revendication 1 ou 2, **caractérisé en ce que**, dans le cas d'un moteur à combustion interne à écoulement transversal, l'au moins un vissage (9) pourvu d'un et/ou couplé à un moyen (11) flexible par ressort et/ou élastiquement est positionné sur le côté tourné vers l'au moins un canal d'entrée dans la tête de cylindre (1) et constituant le côté froid (3) du moteur à combustion interne.

4. Moteur à combustion interne selon une des revendications précédentes, **caractérisé en ce que**, en plus du vissage (9) pourvu d'un et/ou couplé à l'au moins un moyen (11) flexible par ressort et/ou élastiquement sur le côté froid (3), également au moins une partie des vissages, en particulier au moins un vissage directement voisin du côté froid (3), au niveau des côtés se raccordant au côté froid (3) sensiblement dans le sens transversal et à leurs extrémités opposées, est couplée à et/ou pourvue d'au moins un moyen flexible par ressort et/ou élastiquement.

5. Moteur à combustion interne selon une des revendications précédentes, **caractérisé en ce que** le moyen flexible par ressort et/ou élastiquement (11), en particulier un élément à ressort de compression ou un ressort de compression hélicoïdal, présente un tel élément ou est composé d'un tel élément qui est couplé au vissage respectivement associé (9) de manière à ce que l'élément à ressort, en état de base monté, précontraigne une zone d'appui (2a) de chapeau de soupape posée et/ou reposant sur la tête de cylindre (1) avec une force de précontrainte définie en direction de la tête de cylindre (1), cette zone d'appui (2a) de chapeau de soupape se soulevant de la tête de cylindre (1) à l'encontre de la force de l'élément à ressort dans le cas d'une surpression définie.

6. Moteur à combustion interne selon la revendication 5, **caractérisé en ce que** le vissage (9) présente un boulon fileté (12) qui est vissé à travers la zone d'appui de chapeau de soupape (2a) dans la tête de cylindre (1), l'élément à ressort de compression (11) étant traversé par une tige de boulon (19) dépassant de la zone d'appui (2a) de chapeau de soupape à raison d'une dimension définie et/ou prédéterminée du boulon fileté (12) de manière à ce que l'élément à ressort (11) soit respectivement contraint directement ou indirectement entre un élément de butée (17, 18) situé au niveau de la tige de boulon d'une part et la zone d'appui (2a) de chapeau de soupape d'autre part et exerce une force de compression définie et/ou prédéfinie sur la zone d'appui (2a) du chapeau de soupape en direction de la tête de cylindre (1).

7. Moteur à combustion interne selon la revendication 6, **caractérisé en ce que** l'élément de butée situé au niveau de la tige de boulon est constitué par une tête de vis (17, 18) du boulon fileté (12) ou par un écrou fileté (13) pouvant être vissé sur un boulon fileté ou par au moins une saillie située au niveau de la tige de boulon, en particulier un échelon et/ou une collerette annulaire, sur lequel ou sur laquelle l'élément à ressort (11) s'appuie.

8. Moteur à combustion interne selon la revendication 6 ou 7, **caractérisé en ce que** l'élément à ressort (11) s'appuie, au niveau de la zone d'appui (2a) de chapeau de soupape, indirectement par un disque (21) en forme de plateau à ressort traversé par la tige de boulon (19) du boulon fileté (12).

9. Moteur à combustion interne selon une des revendications 6 à 8, **caractérisé en ce que** la tige de boulon (19) du boulon fileté (12) est entourée par une douille ou un manchon rigide (20) qui, lorsque le vissage (9) est monté, est serré en tant que manchon de compression directement ou indirectement entre la tête de cylindre (1) d'une part et une tête de vis (17, 18) ou un écrou fileté du boulon fileté d'autre part.

10. Moteur à combustion interne selon la revendication 5, **caractérisé en ce que** l'élément à ressort (11) est serré entre deux plateaux à ressort (10) qui sont emboîtés sur un boulon fileté (12), les plateaux à ressort (10) présentant une section de guidage (10a) en forme de douille dépassant dans la circonférence intérieure de l'élément à ressort de compression (11) et un anneau d'appui (10b) dépassant radialement.

11. Moteur à combustion interne selon la revendication 10, **caractérisé en ce que** le boulon fileté (12) est vissé fixement dans un alésage fileté (1b) de la tête de cylindre (1), les plateaux à ressort (10) étant serrés ensemble avec l'élément à ressort (11) au moyen d'un écrou fileté autobloquant (13).

12. Moteur à combustion interne selon la revendication 10 ou 11, **caractérisé en ce que**, entre un plateau à ressort inférieur (10) en position de montage et la zone d'appui de chapeau de soupape (2a) du chapeau de soupape (2), est inséré un disque d'amortissement (14).

13. Moteur à combustion interne selon une des revendications précédentes, **caractérisé en ce que** le chapeau de soupape (2), au moins au niveau du vissage (9) pourvu de et/ou couplé à l'au moins un moyen flexible par ressort et/ou élastiquement, est fabriqué de manière à être élastique et/ou à partir d'un matériau déformable élastiquement.

14. Moteur à combustion interne selon une des revendications précédentes, **caractérisé en ce que** le chapeau de soupape (2) est réalisé en matériau uniforme et/ou en une pièce sous forme du chapeau enserrant l'ensemble de la tête de cylindre (1).

15. Moteur à combustion interne selon une des revendications précédentes, **caractérisé en ce que** le joint (7), dans sa position de base montée, est disposé entre la tête de cylindre (1) et le chapeau de soupape (2) ou que le joint (7), au moins au niveau du vissage (9) pourvu de et/ou couplé à l'au moins un moyen agissant de manière flexible par ressort et/ou élastiquement, est raccordé en correspondance géométrique et/ou mécanique et/ou en correspondance de matière à la tête de cylindre (1) et/ou au chapeau de soupape (2).
